# EUROPEAN PATENT SPECIFICATION

(11) **EP 4 591 824 B1**
(45) Date of publication and mention of the grant of the patent: **30.09.2026**
(21) Application number: 23867280.2
(22) Date of filing: 05.09.2023
(51) Int. Cl.: A61C 7/14, A61C 7/16

(54) **LINGUAL BRACKET**
LINGUALE KLAMMER
SUPPORT LINGUAL

(30) Priority: 21.09.2022 CN 202222505938 U
(43) Date of publication of application: 30.07.2025
(73) Proprietor: Chen, Qifeng, Ningde, Fujian 352101 (CN); Chen, Jialiang, Ningde, Fujian 352101 (CN)
(72) Inventor: Chen, Qifeng, Ningde, Fujian 352101 (CN); Chen, Jialiang, Ningde, Fujian 352101 (CN)
(74) Representative: Patentgruppen A/S
(86) International application number: PCT/CN2023/116971
(87) International publication number: WO 2024/060989

(56) References cited:
- CN-A- 101 912 312
- CN-U- 201 492 528
- CN-U- 205 885 560
- CN-U- 205 885 560
- CN-U- 209 285 764
- CN-U- 218 528 930
- JP-A- H08 112 293
- US-A- 5 067 897
- US-A1- 2013 157 214
- US-A1- 2016 228 217
- US-A1- 2017 065 376
- YI-LI YU, YU-FEN QIAN: "The Clinical Implication of Self-ligating Brackets", SHANGHAI KOU QIANG YI XUE = SHANGHAI JOURNAL OF STOMATOLOGY, SHANGHAI JIAOTONG DAXUE YIXUEYUAN FUSHU DI-9 RENMIN YIYUAN, CN, vol. 16, no. 4, 31 August 2017 (2017-08-31), CN , pages 431 - 435, XP009553385, ISSN: 1006-7248

## Description

### Field of the Invention

The present utility model relates to the field of dental orthodontics, and in particular to a lingual bracket, especially a solution in which positioning is made by pre-tension of a spring and sustaining orthodontic force is generated by the spring.

### Description of the Prior art

The prior patent CN201010262798.9 discloses a lingual bracket, including a bracket body and a movable wing, characterized in that the bracket body consists of a bracket base whose lower surface is provide with a non-skid pattern and a fixed wing which is integrally protruded at an end of the bracket base, a through hole being provided along a central axis of the fixed wing; the movable wing has an end with an arch wire hook and the other end with a fixed portion; and the section where an end of the fixed portion of the movable wing passes through the through hole in the fixed wing is sleeved with a spring, an end of which abuts against the fixed wing, and the other end of which is positioned at the fixed portion of the movable wing. In the structure, only after the fixed portion of the movable wing passes through the through hole, the spring can be loaded to form an abutting relationship, and the fixed portions of other structures, except for the solution of its outward bending, enable relatively cumbersome operations clinically; and, the solution of the fixed portion's outward bending is also limited by the material of the bracket, and clinically, the drawback of breaking often occurs during bending.

The prior patent US2013157214A1 discloses a lingual bracket comprises a bracket body and a movable wing. The bracket body comprises a bracket seat, with non-skid pattern on its lower surface and a stationary wing integrally and protrudingly provided onto an end of the bracket seat. A through hole is arranged along the central axis of the stationary wing. A movable wing has an arch wire hook at an end and a fixed portion at the other end. The fixed portion end of the movable wing passes through the through hole in the stationary wing, and a spring is sleeved on the section of the movable wing passing through the through hole. One end of the spring is engaged against the stationary wing, and the other end is retained on the fixed portion of the movable wing. The arch wire hook of the movable wing can hook an arch wire by constant orthodontic force provided by the spring.

Further prior art is exemplified by CN205885560U.

How to provide a solution of an easily assembled bracket to overcome the shortcomings of the prior art becomes the research subject of the present utility model.

### Summary of the Invention

The invention is as defined in the appended patent claims.

The purpose of the present utility model is to design a lingual bracket in which a bracket wing is constrained by a bracket base in cooperation with a spring by longitudinal and transverse grooves perpendicular to each other.

The technical solution of the present utility model is implemented as follows: a lingual bracket, comprising a bracket base, a bracket wing, and a spring, the bracket base having an upper surface with an end provided with a fixed wing and the other end provided with an auxiliary tube, and a bottom face provided with a non-skid bonding face; and the bracket wing having an insertion leg and a wing portion, and capable of being positioned on the fixed wing by the spring sleeved on the insertion leg; characterized in that: a longitudinal groove is provided along a central axis of the fixed wing of the bracket base, and a transverse groove is provided at a rear end face of the fixed wing; and the insertion leg of the bracket wing has the width equivalent to that of the longitudinal groove, and is capable of being placed in the longitudinal groove, a joint of the insertion leg and the wing portion is provided with a wide extension part, and when the insertion leg is placed in the longitudinal groove and pushed forward by the spring, the wide extension portion is capable of being interposed into the transverse groove to form a positioning structure.

The upper surface of the bracket base forms a first arc face between the auxiliary tube and the fixed wing, at least a lower surface of the transverse groove of the fixed wing forms a second arc face, and the first arc face and the second arc face share a same center point; the bonding face of the bracket base is biased at an end of the auxiliary tube, and forms a raised arc at an end of the fixed wing; and a mating face of the bracket wing mated with the bracket base also forms an arc face structure that, upon assembling in place, has the same center point as the first arc face.

The second arc face of the surface of the bracket base has a radius smaller than that of the first arc face and the radius of the second arc face is at least one wire diameter of the spring smaller than that of the first arc face.

The fixed wing of the bracket base has an arched top and is provided with, in a facing-forward mode, a tying wing; and the wing portion of the bracket wing is provided with, in a facing-forward mode, a cap mated with the arched top, and is provided with, in a facing-downward mode, a tying hook.

A square-corner slot accommodating an arch wire is provided between the cap of the bracket wing and the wide extension portion.

The bracket wing is machined to have an arch wire slot at a rear side of the cap, and the arch wire slot has front and rear slot faces which are arc faces centered on the auxiliary tube.

The present utility model ingeniously utilizes two crisscrossed grooves in the bracket base to from the constrain for the bracket wing, and leads to a simplified assembling process in which only placement after compressing a spring is required, and continuous orthodontic force can also be generated by means of spring force; and the present utility model has the features of an ingenious design, a simple structure, easy machining, and a convenient clinical operation.

### Brief Description of the Drawings

The present utility model is further described below in combination with specific drawings:
FIG. 1 is a schematic view of a lingual bracket;
FIG. 2 is a schematic exploded view of a lingual bracket;
FIG. 3 is a schematic side view of a lingual bracket; and
FIG. 4 is a schematic side view of a lingual bracket II.

In which:
1 - bracket base; 11 - fixed wing; 111 - longitudinal groove; 112 - transverse groove
12 - auxiliary tube; 13 - bonding face; 14 - first arc face; 15 - second arc face
16 - tying wing; 2 - bracket wing; 21 - insertion leg; 22 - wing portion
221 - cap; 222 - tying hook; 223 - square-corner slot; 224 - arch wire slot
23 - wide extension portion; 24 - T-shape head; 3 - spring

### Detailed Description of the Preferred Embodiments

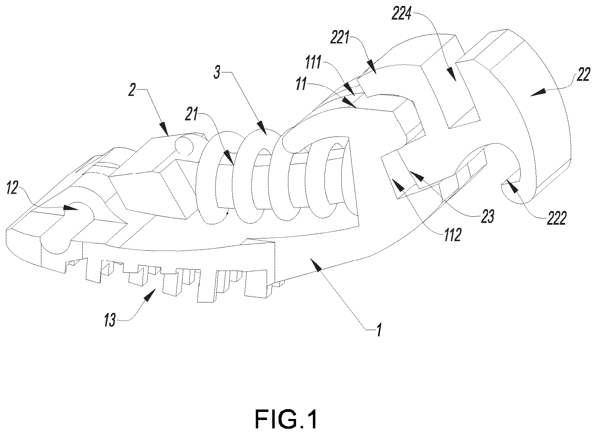

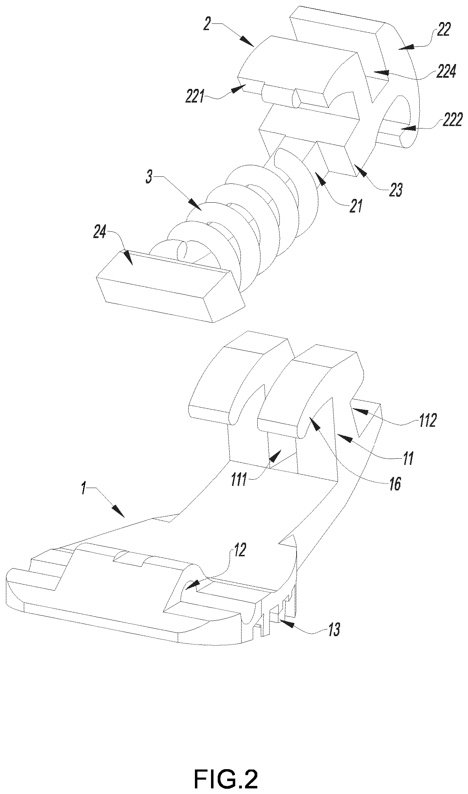

Referring to FIGS. 1, 2 and 3, a lingual bracket includes a bracket base 1, a bracket wing 2, and a spring 3; the bracket base 1 has an upper surface with an end provided with a fixed wing 11 and the other end provided with an auxiliary tube 12, and a bottom face provided with a non-skid bonding face 13; a longitudinal groove 111 is provided along a central axis of the fixed wing 11, and a transverse groove 112 is provided at a rear end face of the fixed wing, the transverse groove 112 and the longitudinal groove 111 form a perpendicular structure and are both open structures, facilitating to assemble the bracket wing 2 via placement.

The bracket wing 2 has an insertion leg 21 and a wing portion 22, and the insertion leg 21 has the width equivalent to that of the longitudinal groove 111, and can be placed in the longitudinal groove 111; and a joint of the insertion leg 21 and the wing portion 22 is provided with a wide extension part 23, and the free end of the insertion leg 21 has a T-shape head 24. The spring 3 is sleeved on the insertion leg 21, and when the spring 3 is assembled in place, one end of the spring 3 abuts against the T-shape head 24, and the other end of the spring 3 abuts against the fixed wing 11. The spring 3 can be put outside the insertion leg 21 via rotation through a wire gap, when the bracket wing is assembled, the insertion leg 21 is placed in the longitudinal groove 111 after the spring 3 is compressed, and abuts against the fixed wing 11 when the spring 3 is released, the wide extension portion 23 can be interposed into the transverse groove 112 by being pushed forward by the spring, and by means of the in-place interlocking of the wide extension portion 23 with the transverse groove 112, the axis inclination of a tooth can be effectively controlled.

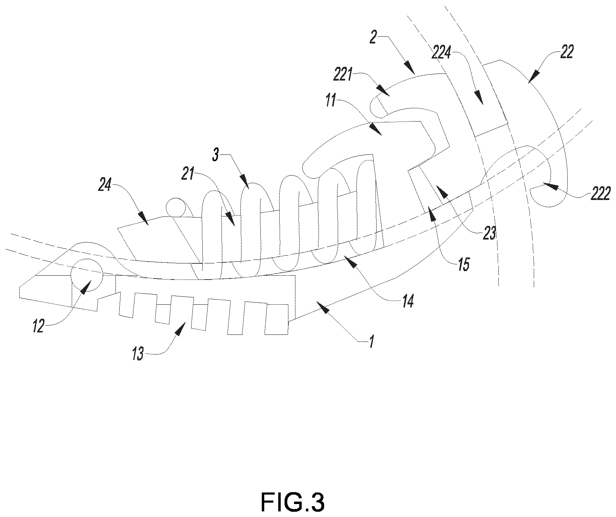

As shown in FIG. 3, furthermore, the upper surface of the bracket base 1 forms a first arc face 14 between the auxiliary tube and the fixed wing, at least a lower surface of the transverse groove of the fixed wing forms a second arc face 15, and the first arc face 14 and the second arc face 15 have a same center point; and the bonding face 13 of the bracket base is biased at an end of the auxiliary tube 12, and forms a raised arc at an end of the fixed wing 11 to generate a clearance space for a tooth neck.

A mating face of the bracket wing 2 mated with the bracket base 1 also forms an arc face structure that, upon assembling in place, has a same center point as the first arc face 14. Specifically, the mating face referred here is the lower surface of the bracket wing 2, which is allowed to closely fit to the second arc face 15 of the bracket base, and is suitable for a feeding process for orthodontic.

Additionally, the second arc face 15 of the surface of the bracket base 1 has a radius smaller than that of the first arc face 14 and the radius of the second arc face 15 is at least one wire diameter of the spring 3 smaller than that of the first arc face, to generate a clearance space for assembling a spring. In addition to a cylindrical spring, the spring 3 may be a rectangular spring.

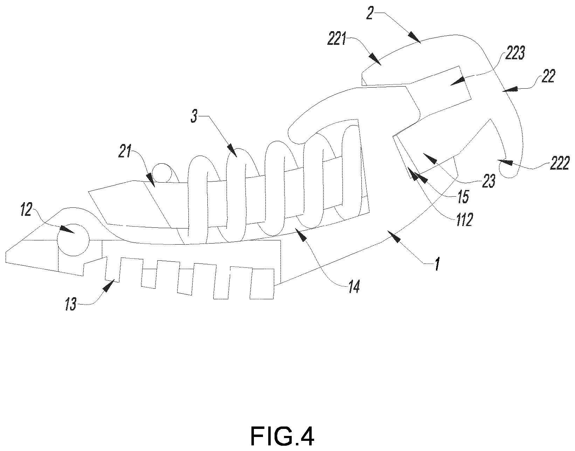

The fixed wing 11 of the bracket base has an arched top and is provided with, in a facing-forward mode, a tying wing 16 with which an end of the spring 3 may be constrained to prevent the bracket wing 2 from disengaging; and the wing portion 22 of the bracket wing is provided with, in a facing-forward mode, a cap 221 that is mated with the arched top, and is provided with, in a facing-downward mode, a tying hook 222, as shown in FIG. 4. On that basis, a square-corner slot 223 accommodating an arch wire is provided between the cap 221 and the wide extension portion 23 to facilitate placement of orthodontics arch wire.

Or, as shown in FIG. 3, the bracket wing is machined to have an arch wire slot 224 at a rear side of the cap 221, and the arch wire slot 224 has front and rear slot faces which are arc faces centered on the auxiliary tube 12. In this way, when the thicknesses of tooth necks are different, individual differences due to the thicknesses can be compensated for by changing the depth by which the arch wire is fed into the groove, while the auxiliary tube is maintained at the same position, so that the distance from the auxiliary tube to the main arch wire is the same distance, reducing bracket errors in clinical caused by differences in teeth.

The dashed lines in FIG. 3 represent concentric arc segments.

## Claims

1. A lingual bracket, comprising a bracket base (1), a bracket wing (2), and a spring (3), the bracket base (1) having an upper surface with one end provided with a fixed wing (11) and an opposite end provided with an auxiliary tube (12), and a bottom face provided with a non-skid bonding face (13); and the bracket wing (2) having an insertion leg (21) and a wing portion (22), and capable of being positioned on the fixed wing (11) by the spring (3) sleeved on the insertion leg (21); wherein a longitudinal groove (111) is provided along a central axis of the fixed wing (11) of the bracket base; and the insertion leg (21) of the bracket wing (2) has a width equivalent to that of the longitudinal groove (111), and is capable of being placed in the longitudinal groove (111), a joint of the insertion leg (21) and the wing portion (22) is provided with a wide extension portion (23), **characterised in that** a transverse groove (112) is provided at a rear end face of the fixed wing (11), and when the insertion leg (21) is placed in the longitudinal groove (111) and pushed forward by the spring (3), the wide extension portion (23) is capable of being interposed into the transverse groove (112) to form a positioning structure.

2. The lingual bracket according to claim 1, **characterized in that** the upper surface of the bracket base (1) forms a first arc face (14) between the auxiliary tube (12) and the fixed wing (11), at least a lower surface of the transverse groove (112) of the fixed wing (11) forms a second arc face (15), and the first arc face (14) and the second arc face (15) share a same center point; the bonding face (13) of the bracket base (1) is biased at an end of the auxiliary tube (12), and forms a raised arc at an end of the fixed wing (11); and a mating face of the bracket wing (2) mated with the bracket base (1) also forms an arc face structure that, upon assembling in place, has the same center point as the first arc face (14).

3. The lingual bracket according to claim 2, **characterized in that** the second arc face (15) of the surface of the bracket base (1) has a radius smaller than that of the first arc face (14), and the radius of the second arc face (15) is at least one wire diameter of the spring smaller than that of the first arc face (14).

4. The lingual bracket according to claim 1 or 2, **characterized in that** the fixed wing (11) of the bracket base (1) has an arched top and is provided with, in a facing-forward mode, a tying wing (16); and the wing portion (22) of the bracket wing (2) is provided with, in a facing-forward mode, a cap (221) mated with the arched top, and is provided with, in a facing-downward mode, a tying hook (222).

5. The lingual bracket according to claim 4, **characterized in that** a square-corner slot (223) accommodating an arch wire is provided between the cap (221) of the bracket wing (2) and the wide extension portion (23).

6. The lingual bracket according to claim 4, **characterized in that** the bracket wing (2) is machined to have an arch wire slot (224) at a rear side of the cap (221), and the arch wire slot (224) has front and rear slot faces which are arc faces centered on the auxiliary tube (12).

## Patentansprüche

1. Lingualbracket, umfassend eine Bracketbasis (1), einen Bracketflügel (2) und eine Feder (3), wobei die Bracketbasis (1) eine oberste Schicht aufweist, bei der ein Ende mit einem feststehenden Flügel (11) versehen ist und ein gegenüberliegendes Ende mit einem Hilfsröhrchen (12) versehen ist, und eine Bodenfläche, die mit einer rutschfesten Verbindungsfläche (13) versehen ist; und der Bracketflügel (2) einen Einsteckschenkel (21) und einen Flügelabschnitt (22) aufweist und durch die auf den Einsteckschenkel (21) aufgeschobene Feder (3) an dem feststehenden Flügel (11) positionierbar ist; wobei eine Längsnut (111) entlang einer Mittelachse des feststehenden Flügels (11) der Bracketbasis bereitgestellt ist; und der Einsteckschenkel (21) des Bracketflügels (2) eine Breite aufweist, die der der Längsnut (111) entspricht, und in der Längsnut (111) platziert werden kann, wobei eine Verbindung des Einsteckschenkels (21) und des Flügelabschnitts (22) mit einem breiten Verlängerungsabschnitt (23) versehen ist, **dadurch gekennzeichnet, dass** eine Quernut (112) an einer hinteren Stirnfläche des feststehenden Flügels (11) bereitgestellt ist, und wenn der Einsteckschenkel (21) in der Längsnut (111) platziert und durch die Feder (3) nach vorne geschoben wird, der breite Verlängerungsabschnitt (23) in die Quernut (112) eingeführt werden kann, um eine Positionierungsstruktur zu bilden.

2. Lingualbracket nach Anspruch 1, **dadurch gekennzeichnet, dass** die oberste Schicht der Bracketbasis (1) eine erste Bogenfläche (14) zwischen dem Hilfsröhrchen (12) und dem feststehenden Flügel (11) bildet, mindestens eine untere Oberfläche der Quernut (112) des feststehenden Flügels (11) eine zweite Bogenfläche (15) bildet, und die erste Bogenfläche (14) und die zweite Bogenfläche (15) einen gemeinsamen Mittelpunkt aufweisen; die Verbindungfläche (13) der Bracketbasis (1) an einem Ende des Hilfsröhrchens (12) vorverformt ist und an einem Ende des feststehenden Flügels (11) einen erhabenen Bogen bildet; und eine Passfläche des Bracketflügels (2), die mit der Bracketbasis (1) in Eingriff steht, ebenfalls eine Bogenflächenstruktur bildet, die im montierten Zustand den gleichen Mittelpunkt wie die erste Bogenfläche (14) aufweist.

3. Lingualbracket nach Anspruch 2, **dadurch gekennzeichnet, dass** die zweite Bogenfläche (15) der Oberfläche der Bracketbasis (1) einen Radius aufweist, der kleiner ist als der der ersten Bogenfläche (14), und der Radius der zweiten Bogenfläche (15) um mindestens einen Drahtdurchmesser der Feder kleiner ist als der der ersten Bogenfläche (14).

4. Lingualbracket nach Anspruch 1 oder 2,
**dadurch gekennzeichnet, dass** der feststehende Flügel (11) der Bracketbasis (1) eine gewölbte Oberseite aufweist und in einem nach vorne gerichteten Modus mit einem Ligaturflügel (16) versehen ist; und der Flügelabschnitt (22) des Bracketflügels (2) in einem nach vorne gerichteten Modus mit einer Kappe (221), die mit der gewölbten Oberseite in Eingriff steht, versehen ist und in einem nach unten gerichteten Modus mit einem Ligaturhaken (222) versehen ist.

5. Lingualbracket nach Anspruch 4, **dadurch gekennzeichnet, dass** ein rechtwinkliger Schlitz (223) zur Aufnahme eines Bogendrahts zwischen der Kappe (221) des Bracketflügels (2) und dem breiten Verlängerungsabschnitt (23) bereitgestellt ist.

6. Lingualbracket nach Anspruch 4, **dadurch gekennzeichnet, dass** der Bracketflügel (2) so bearbeitet ist, dass er einen Bogendrahtschlitz (224) an einer Rückseite der Kappe (221) aufweist, und der Bogendrahtschlitz (224) vordere und hintere Schlitzflächen aufweist, die auf dem Hilfsröhrchen (12) zentrierte Bogenflächen sind.

## Revendications

1. Support lingual, comprenant une base de support (1), une aile de support (2) et un ressort (3), la base de support (1) ayant une surface supérieure avec une extrémité pourvue d'une aile fixe (11) et une extrémité opposée pourvue d'un tube auxiliaire (12), et une face inférieure pourvue d'une face de liaison antidérapante (13) ; et l'aile de support (2) ayant une patte d'insertion (21) et une partie aile (22), et pouvant être positionnée sur l'aile fixe (11) par le ressort (3) manchonné sur la patte d'insertion (21) ; dans lequel une rainure longitudinale (111) est prévue le long d'un axe central de l'aile fixe (11) de la base de support ; et la patte d'insertion (21) de l'aile de support (2) a une largeur équivalente à celle de la rainure longitudinale (111), et peut être placée dans la rainure longitudinale (111), un joint de la patte d'insertion (21) et de la partie aile (22) est pourvu d'une large partie d'extension (23), **caractérisé en ce qu'une** rainure transversale (112) est prévue au niveau d'une face d'extrémité arrière de l'aile fixe (11), et lorsque la patte d'insertion (21) est placée dans la rainure longitudinale (111) et poussée vers l'avant par le ressort (3), la large partie d'extension (23) peut être interposée dans la rainure transversale (112) pour former une structure de positionnement.

2. Support lingual selon la revendication 1, **caractérisé en ce que** la surface supérieure de la base de support (1) forme une première face d'arc (14) entre le tube auxiliaire (12) et l'aile fixe (11), au moins une surface inférieure de la rainure transversale (112) de l'aile fixe (11) forme une seconde face d'arc (15), et la première face d'arc (14) et la seconde face d'arc (15) partagent la même point central ; la face de liaison (13) de la base de support (1) est sollicitée au niveau d'une extrémité du tube auxiliaire (12), et forme un arc surélevé au niveau d'une extrémité de l'aile fixe (11) ; et une face d'accouplement de l'aile de support (2) accouplée à la base de support (1) forme également une structure de face d'arc qui, lors de l'assemblage en place, a le même point central que la première face d'arc (14).

3. Support lingual selon la revendication 2, **caractérisé en ce que** la seconde face d'arc (15) de la surface de la base de support (1) a un rayon inférieur à celui de la première face d'arc (14), et le rayon de la seconde face d'arc (15) est au moins un diamètre de fil du ressort plus petit que celui de la première face d'arc (14).

4. Support lingual selon la revendication 1 ou 2, **caractérisé en ce que** l'aile fixe (11) de la base de support (1) a une partie supérieure arquée et est pourvue, en mode tourné vers l'avant, d'une aile d'attache (16) ; et la partie aile (22) de l'aile de support (2) est pourvue, en mode tourné vers l'avant, d'un capuchon (221) accouplé à la partie supérieure arquée, et est pourvue, en mode tourné vers le bas, d'un crochet d'attache (222).

5. Support lingual selon la revendication 4, **caractérisé en ce qu'une** fente en coin carré (223) accueillant un arc dentaire est prévue entre le capuchon (221) de l'aile de support (2) et la partie d'extension large (23).

6. Support lingual selon la revendication 4, **caractérisé en ce que** l'aile de support (2) est usinée pour avoir une fente de fil dentaire (224) au niveau d'un côté arrière du capuchon (221), et la fente de fil dentaire (224) a des faces de fente avant et arrière qui sont des faces d'arc centrées sur le tube auxiliaire (12).
